# EUROPÄISCHE PATENTSCHRIFT

(11) **EP 3 287 279 B1**
(45) Veröffentlichungstag und Bekanntmachung des Hinweises auf die Patenterteilung: **01.07.2020**
(21) Anmeldenummer: 17172836.3
(22) Anmeldetag: 24.05.2017
(51) Int. Cl.: B33Y 30/00, B33Y 99/00, B29C 64/364, B29C 64/30

(54) **ANLAGE ZUR ADDITIVEN HERSTELLUNG DREIDIMENSIONALER OBJEKTE**
SYSTEM FOR ADDITIVE MANUFACTURING OF THREE-DIMENSIONAL OBJECTS
INSTALLATION DE FABRICATION ADDITIVE D'OBJETS TRIDIMENSIONNELS

(30) Priorität: 25.08.2016 DE 102016115846
(43) Veröffentlichungstag der Anmeldung: 28.02.2018
(73) Patentinhaber: CL Schutzrechtsverwaltungs GmbH, 96215 Lichtenfels (DE)
(72) Erfinder: HERZOG, Frank, 96215 Lichtenfels (DE); DR. BECHMANN, Florian, 96215 Lichtenfels (DE); SCHUMANN, Philipp, 96274 Itzgrund - Schottenstein (DE)
(74) Vertreter: Hafner & Kohl PartmbB

(56) Entgegenhaltungen:
- EP-A2- 2 689 872
- WO-A1-2016/025599

## Beschreibung

Die Erfindung betrifft eine Anlage zur additiven Herstellung dreidimensionaler Objekte.

Derartige Anlagen zur additiven bzw. generativen Herstellung dreidimensionaler Objekte sind an und für sich bekannt. Entsprechende Anlagen umfassen u.a. Vorrichtungen zur additiven Herstellung dreidimensionaler Objekte. Vermittels entsprechenden Vorrichtungen werden die additiv herzustellenden dreidimensionalen Objekte hergestellt. In entsprechenden Anlagen ist der Einsatz von Pulvermodulen bekannt. Entsprechende Pulvermodule umfassen typischerweise eine ein Pulverkammervolumen begrenzende Pulverkammer zur Aufnahme von im Rahmen eines additiven Bauvorgangs zu verfestigendem oder im Rahmen eines additiven Bauvorgangs nicht verfestigtem Baumaterial. Bodenseitig sind entsprechende Pulverkammern typischerweise durch eine Trageinrichtung begrenzt. Entsprechende Pulvermodule umfassen typischerweise wenigstens einen magnetisierbaren Bestandteil.

Für die additive Herstellung ist eine (möglichst) vollständige Entmagnetisierung entsprechender magnetisierbarer Bestandteile der Pulvermodule gewünscht. Die Magnetisierung entsprechender magnetisierbarer Bestandteile wirkt sich negativ z. B. auf Beschichtungsvorgänge zur Ausbildung selektiv zu verfestigender Baumaterialschichten sowie auf Qualitätssicherungsvorgänge aus, als die Magnetisierung eine besondere Ausrichtung der Baumaterialpartikel bedingen kann, welche eine unerwünschte Streuung des Umgebungslichts bedingt, welche wiederum eine, z. B. kamerabasierte, Begutachtung des Baumaterials beeinträchtigen kann.

Eine insofern erforderliche Entmagnetisierung ist bis dato zeitaufwändig von Hand durchzuführen.

Es besteht ein steter Weiterentwicklungsbedarf entsprechender Anlagen im Hinblick auf eine teil- oder vollautomatisierbare Entmagnetisierung entsprechender magnetisierbarer Bestandteile.

EP 2 689 872 A2 offenbart eine Vorrichtung zur Herstellung eines dreidimensionalen Objekts durch selektives Verfestigen eines pulverförmigen Baumaterials.

Der Erfindung liegt die Aufgabe zugrunde, eine demgegenüber, insbesondere im Hinblick auf eine teil- oder vollautomatisierbare Entmagnetisierung entsprechender magnetisierbarer Bestandteile, verbesserte Anlage zur additiven Herstellung dreidimensionaler Objekte anzugeben.

Die Aufgabe wird durch eine Anlage zur additiven Herstellung dreidimensionaler Objekte gemäß Anspruch 1 gelöst. Die abhängigen Ansprüche betreffen besondere Ausführungsformen der Anlage.

Die hierin beschriebene Anlage dient im Allgemeinen der additiven bzw. generativen Herstellung dreidimensionaler Objekte d. h. beispielsweise technischer Bauteile bzw. technischer Bauteilgruppen.

Die Anlage umfasst wenigstens eine Vorrichtung (im Weiteren abgekürzt als "Vorrichtung" bezeichnet) zur additiven Herstellung wenigstens eines dreidimensionalen Objekts (im Weiteren abgekürzt als "Objekt" bezeichnet) durch sukzessive schichtweise selektive Belichtung und damit einhergehende Verfestigung selektiv zu verfestigender Baumaterialschichten aus einem verfestigbaren Baumaterial vermittels wenigstens eines Energiestrahls. Bei dem verfestigbaren Baumaterial handelt es sich um ein Metall-, Kunststoff- und/oder Keramikpulver. Unter einem Metall-, Kunststoff- oder Keramikpulver kann auch ein Pulvergemisch unterschiedlicher Metalle, Kunststoffe oder Keramiken verstanden werden. Für ein Metallpulver gilt insofern, dass es sich hierbei auch um ein Pulver aus einer Metalllegierung handeln kann. Bei dem Energiestrahl kann es sich um einen Laserstrahl handeln. Bei der Vorrichtung kann es sich entsprechend um eine SLM-Vorrichtung zur Durchführung selektiver Laserschmelzverfahren (abgekürzt SLM-Verfahren) oder um eine SLS-Vorrichtung zur Durchführung selektiver Lasersinterverfahren (abgekürzt SLS-Verfahren) handeln. Bei der Anlage kann es sich entsprechend um eine Anlage zur Durchführung selektiver Laserschmelzverfahren oder um eine Anlage zur Durchführung selektiver Lasersinterverfahren handeln.

Die sukzessive schichtweise selektive Belichtung und die damit einhergehende sukzessive schichtweise selektive Verfestigung der zur additiven Herstellung eines Objekts jeweils zu verfestigenden Baumaterialschichten erfolgt auf Grundlage von objektbezogenen Baudaten. Die Baudaten beschreiben im Allgemeinen die geometrische bzw. geometrisch-konstruktive Gestalt des additiv herzustellenden Objekts. Bei den Baudaten kann es sich beispielsweise um CAD-Daten des herzustellenden Objekts handeln bzw. können diese solche beinhalten.

Die Vorrichtung umfasst sämtliche zur Durchführung additiver Bauprozesse typischerweise erforderlichen Funktionskomponenten. Zu entsprechenden Funktionskomponenten zählt eine Beschichtereinrichtung zur Ausbildung selektiv zu belichtender Baumaterialschichten in einer Bauebene und eine eine oder mehrere, z. B. als Laserdiodenelemente ausgebildete oder solche umfassende, Belichtungselemente umfassende Belichtungseinrichtung zur Erzeugung eines Energiestrahls zur selektiven Belichtung einer vermittels der Beschichtereinrichtung in einer Bauebene ausgebildeten, selektiv zu belichtenden und somit selektiv zu verfestigenden Baumaterialschicht. Die Funktionskomponenten sind typischerweise in einer, gegebenenfalls auch als Maschinengehäuse zu bezeichnenden bzw. zu erachtenden, typischerweise inertisierbaren, Gehäusestruktur der Vorrichtung angeordnet.

Die Anlage umfasst weiterhin wenigstens ein Pulvermodul. Bei dem Pulvermodul kann es sich im Allgemeinen um jedwedes Pulvermodul handeln, welches zur Aufnahme und/oder Abgabe von Baumaterial eingerichtet ist. Jedoch handelt es sich bei zumindest einem der Pulvermodule um ein Baumodul, in welchem der eigentliche additive Aufbau dreidimensionaler Objekte erfolgt und welches hierfür im Rahmen der Durchführung additiver Herstellungsprozesse sukzessive schichtweise mit selektiv zu verfestigendem Baumaterial befüllt wird, um ein Dosiermodul, über welches im Rahmen der Durchführung additiver Herstellungsprozesse sukzessive schichtweise Baumaterial in eine Prozesskammer dosiert wird, oder um ein Auffangmodul, welches im Rahmen der Durchführung additiver Herstellungsprozesse mit nicht verfestigtem Baumaterial befüllt wird.

Das Pulvermodul umfasst eine Pulverkammer zur Aufnahme von im Rahmen eines additiven Bauvorgangs selektiv zu verfestigendem Baumaterial oder von im Rahmen eines additiven Bauvorgangs nicht verfestigtem Baumaterial. Die Pulverkammer begrenzt ein mit Baumaterial befüllbares Pulverkammervolumen. Der Pulverkammervolumen ist zumindest seitlich durch Wandungen (Pulverkammerwandungen) der in der Regel hohlquaderartig bzw. hohlzylinderartig ausgebildeten Pulverkammer begrenzt. Bodenseitig ist das Pulverkammervolumen durch eine Trageinrichtung begrenzt.

Die Trageinrichtung ist typischerweise zwischen zwei Endstellungen, d. h. zwischen einer (bezogen auf die Höhe des Pulvermoduls) oberen und einer (bezogen auf die Höhe des Pulvermoduls) unteren Endstellung, relativ zu der Pulverkammer bewegbar gelagert. Die bewegbare Lagerung der Trageinrichtung ermöglicht die Realisierung einer, insbesondere linearen, Bewegung der Trageinrichtung entlang einer vertikalen Bewegungsachse bzw. in einer vertikalen Bewegungsrichtung. Die bewegbare Lagerung der Trageinrichtung ist durch eine mit dieser gekoppelte Antriebseinrichtung realisiert. Die Antriebseinrichtung ist zur Ausbildung bzw. Erzeugung einer die Trageinrichtung in eine entsprechende Bewegung relativ zu der Pulverkammer versetzenden Kraft (Antriebskraft) eingerichtet. Die Antriebseinrichtung kann z. B. (elektro)mechanisch, hydraulisch oder pneumatisch ausgebildet sein.

Das Pulvermodul umfasst mehrere Bestandteile. Hierzu zählt z. B. die bereits erwähnte Trageinrichtung. Auch die Trageinrichtung umfasst mehrere Bestandteile. Hierzu zählen z. B. ein tischartiger Grundkörper und ein oder mehrere plattenartige bzw. - förmige, insbesondere stapelartig, auf dem Grundkörper angeordnete oder ausgebildete Auflagekörper. Jeweilige Auflagekörper können unterschiedlich funktionalisiert sein. Bei entsprechenden Auflagekörpern kann es sich z. B. um eine Bauplatte, eine Heizplatte oder eine (thermische) Isolierplatte handeln. Wenigstens einer der genannten Bestandteile des Pulvermoduls, insbesondere der Trageinrichtung, ist, z. B. aufgrund seiner Ausbildung aus einem magnetisierbaren Material, wie z. B. ferritischem Stahl, magnetisierbar. Bei einem magnetisierbaren Bestandteil der Trageinrichtung handelt es sich insbesondere, jedoch nicht zwingend um die erwähnte Bauplatte.

Im Hinblick auf die eingangs erwähnte Problematik der Magnetisierung entsprechender magnetischer Bestandteile der Pulvermodule, insbesondere der der Pulvermodule zugehörigen Trageinrichtungen, umfasst die Anlage wenigstens eine Entmagnetisierungseinrichtung. Die Entmagnetisierungseinrichtung ist zur automatisierbaren bzw. automatisierten Entmagnetisierung eines magnetisierten Bestandteils des Pulvermoduls, insbesondere der Trageinrichtung, eingerichtet. Es ist damit möglich, Entmagnetisierungsvorgänge automatisierbar bzw. automatisiert durchzuführen. Die zeitaufwändige Durchführung entsprechender Entmagnetisierungsvorgänge von Hand, bei welcher ein Benutzer ein Entmagnetisierungsgerät von Hand entlang des zu entmagnetisierenden Bestandteils führt, ist nicht mehr erforderlich. Mithin liegt eine verbesserte Anlage zur additiven Herstellung von Objekten vor.

Wie sich im Weiteren ergibt, kann es sich bei der Entmagnetisierungseinrichtung um eine mit einer eigenen Funktionalität - nämlich der Entmagnetisierung entsprechender Bestandteile eines Pulvermoduls - versehene Arbeitsstation innerhalb der Anlage handeln. Die Entmagnetisierungseinrichtung kann sonach eine Entmagnetisierungsstation bilden. Weitere Arbeitsstationen innerhalb der Anlage können beispielsweise durch entsprechende Vorrichtungen gebildete Bau- oder Prozessstationen, in welchen der eigentliche additive Herstellung der Objekte erfolgt, durch Auspackstationen, in welchen ein "Auspacken" additiv hergestellter Objekte aus dem diese umgebenden Baumaterial erfolgt, oder durch Tankstationen, in welchen ein Befüllen oder Entleeren jeweiliger Pulvermodule erfolgt, sein.

Die Entmagnetisierungseinrichtung kann wenigstens eine Erfassungseinheit, welche zur Erfassung der Magnetisierung eines magnetisierten Bestandteils des Pulvermoduls, insbesondere der Trageinrichtung, eingerichtet ist, umfassen. Eine entsprechende Erfassungseinheit ist typischerweise zur Erzeugung einer eine Magnetisierung des wenigstens einen magnetisierten Bestandteils des Pulvermoduls beschreibenden Erfassungsinformationen (Erfassungsergebnis) eingerichtet. Über eine entsprechende Erfassungseinheit ist eine genaue Erfassung der Magnetisierung, d. h. insbesondere des (lokalen oder globalen) Magnetisierungsgrads, etwaiger (lokaler oder globaler) Magnetisierungsgradienten, eines magnetisierten Bestandteils des Pulvermoduls möglich. Kenntnisse über die Magnetisierung eines magnetisierten Bestandteils ermöglichen typischerweise eine effizientere Entmagnetisierung des Bestandteils. Die Erfassungseinheit kann als Magnetometer (Gauß- oder Tesla-Meter) ausgebildet sein oder wenigstens ein solches umfassen.

Die Entmagnetisierungseinrichtung kann weiterhin wenigstens eine Entmagnetisierungseinheit, welche zur Entmagnetisierung des wenigstens einen magnetisierten Bestandteils des Pulvermoduls, insbesondere der Trageinrichtung, eingerichtet ist, umfassen. Die Entmagnetisierungseinheit ist zur Durchführung wenigstens einer Maßnahme zur Entmagnetisierung eines magnetisierten Bestandteils des Pulvermoduls eingerichtet. Bei der Maßnahme kann es sich um das Erzeugen eines Entmagnetisierungsfelds handeln. Bei dem Entmagnetisierungsfeld handelt es sich typischerweise um ein statisches oder dynamisches magnetisches Wechselfeld. Die Entmagnetisierungseinheit kann sonach zur Erzeugung eines entsprechenden Entmagnetisierungsfelds eingerichtet sein und die hierzu erforderlichen Entmagnetisierungselemente, wie z. B. Entmagnetisierungsspulen, umfassen.

Die Anlage kann ferner eine Steuereinrichtung, welche zur Steuerung des Betriebs der wenigstens einen Entmagnetisierungseinheit in Abhängigkeit bzw. auf Grundlage einer eine Magnetisierung des wenigstens einen magnetisierten Bestandteils des Pulvermoduls, insbesondere der Trageinrichtung, beschreibenden Erfassungsinformation eingerichtet ist, umfassen. Die hard- und/oder softwaremäßig implementierte, typischerweise mit der Erfassungseinheit und der Entmagnetisierungseinheit datenmäßig gekoppelte Steuereinrichtung kann sonach im Hinblick auf einen konkret zu entmagnetisierenden magnetisierten Bestandteil eines Pulvermoduls individuell erzeugten Steuerinformationen eingerichtet sein, welche eine besonders effiziente Entmagnetisierung des zu entmagnetisierenden Bestandteils des Pulvermoduls ermöglicht.

Die Entmagnetisierungseinrichtung kann eine einen Aufnahmeraum zur Aufnahme eines zu entmagnetisierenden Pulvermoduls, insbesondere eines magnetisierten Bestandteils der Trageinrichtung, umfassen. In dem Aufnahmeraum kann eine inerte Atmosphäre, insbesondere eine Schutzgasatmosphäre, d. h. z. B. eine Argon- oder Stickstoffatmosphäre, ausbildbar oder ausgebildet sein. Der Aufnahmeraum kann (nach Außen) magnetisch abgeschirmt ein.

Das Pulvermodul kann in der bzw. innerhalb der Anlage, insbesondere zwischen entsprechenden Arbeitsstationen, bewegbar sein und somit bewegt werden. Das Pulvermodul kann sonach z. B. zu der Entmagnetisierungseinrichtung ("Entmagnetisierungsstation") bewegt werden, um einen zu entmagnetisierenden Bestandteil des Pulvermoduls, insbesondere der Trageinrichtung, zu entmagnetisieren. Zur Bewegung des Pulvermoduls kann dieses z. B. mit Rädern oder Rollen ausgestattet sein. Bewegungen des Pulvermoduls innerhalb einer der Anlage zugehörigen (optionalen) Tunnelstruktur werden weiter unten näher erläutert. In analoger Weise ist es selbstverständlich auch denkbar, dass die Entmagnetisierungseinrichtung in der bzw. innerhalb der Anlage, insbesondere zwischen entsprechenden Arbeitsstationen, bewegbar ist und somit bewegt werden kann.

Die Anlage kann eine Tunnelstruktur umfassen. Die Tunnelstruktur verbindet typischerweise wenigstens zwei Arbeitsstationen der Anlage miteinander. Die Tunnelstruktur weist wenigstens einen, insbesondere tunnelröhrenartigen bzw. - förmigen Tunnelabschnitt auf, in welchem bzw. durch welchen wenigstens ein Pulvermodul bewegbar ist. Der Tunnelabschnitt erstreckt sich typischerweise zwischen wenigstens zwei Arbeitsstationen der Anlage. In einem jeweiligen Tunnelabschnitt ist wenigstens eine Bewegungsbahn oder -spur (im Weiteren "Bewegungsbahn"), entlang welcher ein Pulvermodul durch den Tunnelabschnitt bewegbar ist, ausgebildet oder angeordnet. Selbstverständlich ist es möglich, in einem Tunnelabschnitt zumindest abschnittsweise mehrere Bewegungsbahnen, d. h. z. B. benachbart, insbesondere parallel, angeordnete Bewegungsbahnen in einer oder mehreren Ebenen, auszubilden oder anzuordnen. Eine entsprechende Bewegungsbahn kann eine geführte Bewegung eines Pulvermoduls in dem bzw. durch den jeweiligen Tunnelabschnitt ermöglichen.

Die Funktion der Tunnelstruktur bzw. der dieser zugehörigen Tunnelabschnitte besteht, wie erwähnt, darin, wenigstens zwei unterschiedliche Arbeitsstationen der Anlage unmittelbar oder mittelbar, d. h. z. B. unter Zwischenschaltung wenigstens eines weiteren Tunnelabschnitts und/oder einer weiteren Arbeitsstation der Anlage, miteinander zu verbinden. Die Verbindung jeweiliger Arbeitsstationen der Anlage ermöglicht ein hin und her Bewegen jeweiliger Pulvermodulen zwischen jeweiligen Arbeitsstationen der Anlage. Bewegungen jeweiliger Pulvermodule durch die Tunnelstruktur sind insbesondere vollautomatisiert möglich. Über einen oder mehrere Tunnelabschnitte kann z. B. eine der Anlage zugehörige Bau- oder Prozessstation mit einer der Anlage zugehörigen Auspack- oder Tankstation verbunden werden.

Grundsätzlich ist es möglich, dass die Bewegungsbahn, entlang welcher ein Pulvermodul ausgehend von einer ersten Arbeitsstation der Anlage zurück in eine weitere Arbeitsstation der Anlage bewegt wird, anders ist als die Bewegungsbahn, entlang welcher das Pulvermodul ausgehend von der ersten Arbeitsstation in die weitere Arbeitsstation bewegt wurde. Die Auswahl einer Bewegungsbahn eines Pulvermoduls zwischen jeweiligen Arbeitsstationen der Anlage kann auf Grundlage bestimmter Priorisierungen bestimmter Pulvermodule erfolgen. Für höher priorisierte Pulvermodule können streckenmäßig kürzere bzw. schnellere Bewegungsbahnen ausgewählt werden als für niedriger priorisierte Pulvermodule. Gleichermaßen können höher priorisierte Pulvermodule mit einer im Vergleich zu niedriger priorisierten Pulvermodulen höheren Geschwindigkeit bewegt werden.

Zur Bewegung jeweiliger Pulvermodule umfasst die Anlage wenigstens eine Fördereinrichtung. Die Fördereinrichtung kann mit einer (motorischen) Antriebseinrichtung gekoppelt sein, über welche eine wenigstens ein Pulvermodul in eine Bewegung versetzende Antriebskraft erzeugbar ist.

Die Fördereinrichtung kann wenigstens ein tunnelstrukturseitig angeordnetes oder ausgebildetes Fördermittel umfassen, welches eingerichtet ist, ein Pulvermodul in eine Bewegung zu versetzen. Bei einem solchen Fördermittel kann es sich z. B. um ein mechanisches Fördermittel, d. h. z. B. um einen Band-, Ketten- oder Rollenförderer, handeln, welches durch seine räumliche Erstreckung innerhalb eines jeweiligen Tunnelabschnitts eine Förderstrecke und somit eine Bewegungsbahn definiert, entlang welcher ein Pulvermodul bewegbar ist. Ein entsprechendes Fördermittel kann z. B. boden- oder wandseitig an einer Wandung eines Tunnelabschnitts angeordnet oder ausgebildet sein.

Die oder eine Fördereinrichtung kann wenigstens ein pulvermodulseitig angeordnetes oder ausgebildetes Fördermittel umfassen, welches eingerichtet ist, das mit diesem ausgestattete Pulvermodul in eine Bewegung zu versetzen. Bei einem solchen Fördermittel kann es sich z. B. um eine in ein jeweiliges Pulvermodul integrierte (elektro)motorische Antriebseinrichtung handeln. Derart kann die Bewegungsfreiheit eines Pulvermoduls erweitert werden, da z. B. Rotationsbewegungen um eine vertikale Achse möglich sind.

Die Steuerung sämtlicher Bewegungen der in der Anlage, insbesondere in der Tunnelstruktur, bewegten Pulvermodule erfolgt über eine zentrale Steuereinrichtung, welche zweckmäßig unmittelbar oder mittelbar mit jeweiligen Pulvermodulen, welche hierfür mit geeigneten, Kommunikationseinrichtungen ausgestattet sein können, z. B. funkbasiert, kommuniziert. In der zentralen Steuereinrichtung liegen zweckmäßig sämtliche für die Bewegung jeweiliger Pulvermodule innerhalb der Anlage bzw. der Tunnelstruktur relevanten Informationen, d. h. insbesondere jeweilige Bewegungsinformation, d. h. z. B. Geschwindigkeitsinformation, jeweilige Positionsinformation, d. h. z. B. Start- und Zielinformationen, jeweilige Priorisierungsinformationen, etc. vor. Die Steuerung der Bewegungen der in der Anlage bzw. in der Tunnelstruktur bewegten Pulvermodule kann vollautomatisch erfolgen.

Ein jeweiliger Tunnelabschnitt begrenzt wenigstens einen Hohlraum, in welchem bzw. durch welchen wenigstens ein Pulvermodul bewegbar ist. Im Übrigen ist die geometrisch-konstruktive Ausgestaltung eines jeweiligen Tunnelabschnitts mit der Maßgabe, dass wenigstens ein Pulvermodul in diesem bzw. durch diesen bewegbar ist, beliebig wählbar. Ein jeweiliger Tunnelabschnitt kann z. B. eine runde, rundliche oder eckige Querschnittsfläche aufweisen. Im Hinblick auf seine Längserstreckung kann ein jeweiliger Tunnelabschnitt zumindest abschnittsweise, insbesondere vollständig, geradlinig oder zumindest abschnittsweise, insbesondere vollständig, gebogen oder gekrümmt verlaufend ausgebildet sein. Selbstverständlich kann ein jeweiliger Tunnelabschnitt aus mehreren Tunnelabschnittsegmenten, welche unter Ausbildung des jeweiligen Tunnelabschnitts miteinander verbindbar oder verbunden sind, gebildet sein.

Ein jeweiliger Tunnelabschnitt kann in wenigstens einen weiteren, z. B. winklig zu diesem verlaufenden, Tunnelabschnitt münden. Die Tunnelstruktur kann - ähnlich einem aus dem Bahnverkehr bekannten Gleis- oder Schienensystem -mehrere an definierten Positionen ineinander mündende Tunnelabschnitte umfassen. Mehrere Tunnelabschnitte können zumindest abschnittsweise neben-, über- oder untereinander verlaufen. Die Tunnelstruktur kann sonach mehrere zumindest abschnittsweise neben-, über- oder untereinander, mithin in unterschiedlichen (horizontalen und/oder vertikalen) Ebenen verlaufende Tunnelabschnitte umfassen.

Ein jeweiliger Tunnelabschnitt kann inertisierbar sein, d. h. in diesem kann eine inerte Atmosphäre ausgebildet und aufrechterhalten werden. In analoger Weise kann in einem jeweiligen Tunnelabschnitt ein bestimmtes Druckniveau, d. h. z. B. ein Über- oder Unterdruck, ausgebildet und aufrechterhalten werden. Gleiches gilt sonach für die gesamte Tunnelstruktur.

Um mit der Tunnelstruktur verbunden werden zu können, können einzelne, mehrere oder sämtliche Arbeitsstationen der Anlage einen Verbindungsabschnitt aufweisen, über welchen diese mit der Tunnelstruktur verbindbar oder verbunden sind. Beispielsweise kann die Vorrichtung und/oder die Entmagnetisierungseinrichtung wenigstens einen Verbindungsabschnitt aufweisen, über welchen diese mit der Tunnelstruktur verbindbar oder verbunden ist. Mithin können Pulvermodule z. B. ausgehend von der Vorrichtung bzw. der Entmagnetisierungseinrichtung in die Tunnelstruktur oder ausgehend von der Tunnelstruktur in die Vorrichtung bzw. die Entmagnetisierungseinrichtung bewegbar sein.

Konkret können z. B. Pulvermodule mit zu entmagnetisierenden Pulvermodul- bzw. Trageinrichtungsbestandteilen, z. B. ausgehend von der Vorrichtung oder von einer entsprechende Pulvermodule vorhaltenden Lagerstation, über die Tunnelstruktur in die Entmagnetisierungseinrichtung bewegt, dort entmagnetisiert und über die Tunnelstruktur zurück z. B. in die Vorrichtung, bewegt werden.

Die Erfindung ist anhand von Ausführungsbeispielen in den Zeichnungsfiguren näher erläutert. Dabei zeigen:
- Fig. 1: eine Prinzipdarstellung eines Ausschnitts einer Anlage zur additiven Herstellung dreidimensionaler Objekte gemäß einem Ausführungsbeispiel;
- Fig. 2: eine Prinzipdarstellung einer Anlage zur additiven Herstellung dreidimensionaler Objekte gemäß einem weiteren Ausführungsbeispiel.

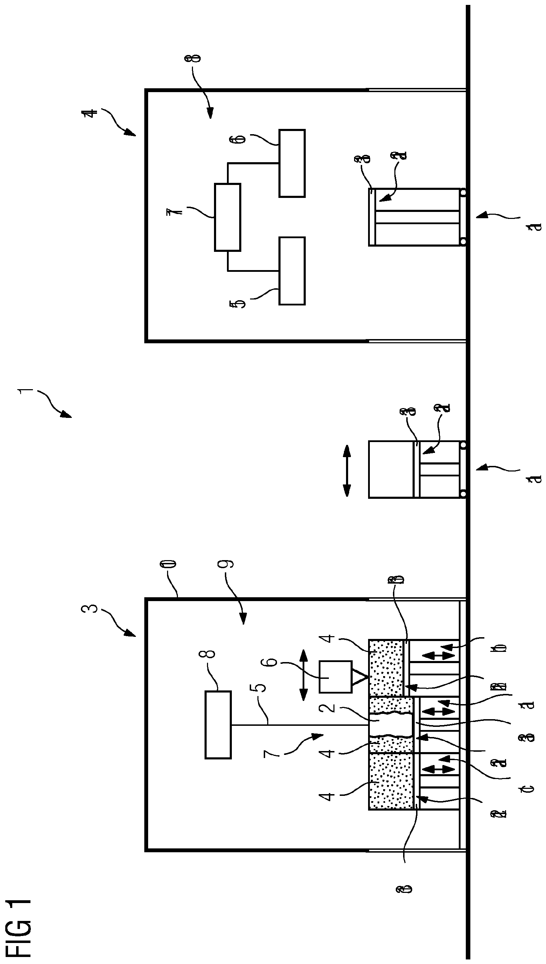

Fig. 1 zeigt eine Prinzipdarstellung eines Ausschnitts einer Anlage 1 zur additiven Herstellung dreidimensionaler Objekte 2, d. h. beispielsweise technischer Bauteile bzw. technischer Bauteilgruppen, gemäß einem Ausführungsbeispiel in einer schematischen Seitenansicht.

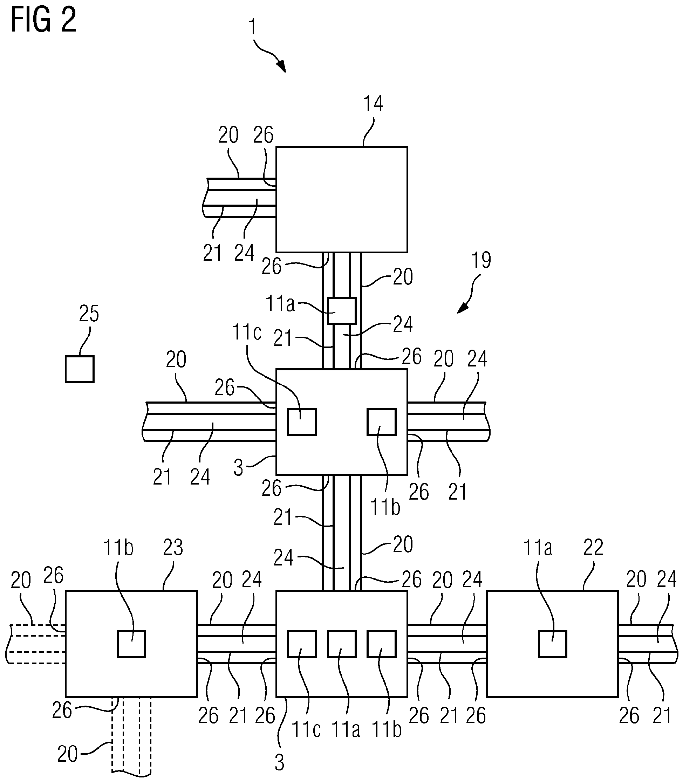

Die Anlage 1 umfasst eine Vorrichtung 3 ("Bau- oder Prozessstation") zur additiven Herstellung dreidimensionaler Objekte 2 durch sukzessive schichtweise selektive Belichtung und damit einhergehende Verfestigung einzelner Baumaterialschichten aus einem verfestigbaren Baumaterial 4 vermittels eines Energiestrahls 5 (nähere funktionelle Details der Vorrichtung 3 ergeben sich aus Fig. 2). Bei dem verfestigbaren Baumaterial 4 kann es sich z. B. um ein Metallpulver handeln. Bei dem Energiestrahl 5 kann es sich um einen Laserstrahl handeln. Bei der Vorrichtung 3 kann es sich entsprechend um eine Vorrichtung zur Durchführung selektiver Laserschmelzverfahren (abgekürzt SLM-Verfahren) oder selektiver Lasersinterverfahren (abgekürzt SLS-Verfahren) handeln. Bei der Anlage 1 kann es sich entsprechend um eine Anlage zur Durchführung selektiver Laserschmelzverfahren (abgekürzt SLM-Verfahren) oder selektiver Lasersinterverfahren (abgekürzt SLS-Verfahren) handeln.

Die Vorrichtung 3 umfasst sämtliche zur Durchführung additiver Bauprozesse erforderlichen Funktionskomponenten. Zu entsprechenden Funktionskomponenten zählt eine, wie durch den horizontal ausgerichteten Doppelpfeil angedeutet, bewegbar gelagerte Beschichtereinrichtung 6 zur Ausbildung selektiv zu belichtender Baumaterialschichten in einer Bauebene 7 und eine, z. B. eine oder mehrere als Laserdiodenelemente ausgebildete oder solche umfassende Belichtungselemente (nicht gezeigt) umfassende, Belichtungseinrichtung 8 zur Erzeugung eines Energiestrahls 5 zur selektiven Belichtung einer vermittels der Beschichtereinrichtung 6 in der Bauebene 7 ausgebildeten, selektiv zu belichtenden Baumaterialschicht. Die Funktionskomponenten sind in einer eine Prozesskammer 9 definierenden Gehäusestruktur 10 der Vorrichtung 3 angeordnet. Die Prozesskammer 9 ist inertisierbar, in der Prozesskammer 9 lässt sich sonach eine Schutzgasatmosphäre, z. B. eine Argonatmosphäre, und/oder ein bestimmtes Druckniveau ausbilden und aufrechterhalten.

Die Anlage 1 umfasst mehrere Pulvermodule 11a - 11c, welche zur Aufnahme und/oder Abgabe von Baumaterial 4 eingerichtet sind. In Fig. sind folgende Pulvermodule 11a - 11c gezeigt: ein Baumodul 11a, in welchem der eigentliche additive Aufbau dreidimensionaler Objekte 2 erfolgt und welches hierfür im Rahmen der Durchführung additiver Herstellungsprozesse sukzessive schichtweise mit selektiv zu verfestigendem Baumaterial 4 befüllt wird, ein Dosiermodul 11b, über welches im Rahmen der Durchführung additiver Herstellungsprozesse sukzessive schichtweise Baumaterial 4 in die Prozesskammer 9 dosiert wird, und ein Auffangmodul 11c, welches im Rahmen der Durchführung additiver Herstellungsprozesse mit nicht verfestigtem Baumaterial 4 befüllt wird.

Jedes Pulvermodul 11a - 11c umfasst eine Pulverkammer (nicht näher bezeichnet) zur Aufnahme von im Rahmen eines additiven Bauvorgangs selektiv zu verfestigendem Baumaterial 4 oder von im Rahmen eines additiven Bauvorgangs nicht verfestigtem Baumaterial 4. Die Pulverkammer begrenzt ein mit Baumaterial befüllbares Pulverkammervolumen. Der Pulverkammervolumen ist zumindest seitlich durch Wandungen (Pulverkammerwandungen) der in der Regel hohlquaderartig bzw. hohlzylinderartig ausgebildeten Pulverkammer begrenzt. Bodenseitig ist das Pulverkammervolumen durch eine Trageinrichtung 12a - 12c begrenzt.

Jede Trageinrichtung 12a - 12c ist typischerweise zwischen zwei Endstellungen, d. h. zwischen einer (bezogen auf die Höhe des Pulvermoduls 11a - 11c) oberen und einer (bezogen auf die Höhe des Pulvermoduls 11a - 11c) unteren Endstellung, relativ zu der Pulverkammer bewegbar gelagert. Die bewegbare Lagerung der Trageinrichtungen 12a - 12c ermöglicht die Realisierung einer Bewegung der Trageinrichtungen 12a - 12c entlang einer durch den vertikalen Doppelpfeil angedeuteten vertikalen Bewegungsachse bzw. in einer vertikalen Bewegungsrichtung. Die bewegbare Lagerung der Trageinrichtungen 12a - 12c ist durch eine mit der jeweiligen Trageinrichtung 12a - 12c gekoppelte Antriebseinrichtung (nicht näher bezeichnet) realisiert. Die Antriebseinrichtungen sind zur Ausbildung bzw. Erzeugung einer die jeweilige Trageinrichtung 12a - 12c in eine entsprechende Bewegung relativ zu der Pulverkammer versetzenden Kraft (Antriebskraft) eingerichtet. Die Antriebseinrichtungen können z. B. (elektro)mechanisch, hydraulisch oder pneumatisch ausgebildet sein.

Die Trageinrichtungen 12a - 12c und somit die Pulvermodule 11a - 11c umfassen jeweils mehrere Bestandteile. Hierzu zählen z. B. ein tischartiger Grundkörper (nicht näher bezeichnet) und ein oder mehrere plattenartige bzw. -förmige, insbesondere stapelartig, auf dem Grundkörper angeordnete oder ausgebildete Auflagekörper 13a - 13c. Jeweilige Auflagekörper 13a - 13c können unterschiedlich funktionalisiert sein. Bei entsprechenden Auflagekörpern 13a - 13c kann es sich z. B. um eine Bauplatte, eine Heizplatte oder eine (thermische) Isolierplatte handeln. Eine oder mehrere der genannten Bestandteile der Trageinrichtung 12a - 12c, im Allgemeinen des Pulvermoduls 11a - 11c, sind, z. B. aufgrund ihrer Ausbildung aus einem magnetisierbaren Material, wie z. B. ferritischem Stahl, magnetisierbar. Bei einem magnetisierbaren Bestandteil der Trageinrichtung 12a - 12c kann es sich insbesondere, jedoch nicht zwingend um die erwähnte Bauplatte handeln.

Entsprechende magnetisierbare Bestandteile der Pulvermodule 11a - 11c, d. h. insbesondere der Trageinrichtungen 12a - 12c, werden insbesondere im Betrieb der Anlage 1 unter gewissen Umständen magnetisiert. Eine Magnetisierung der magnetisierbaren Bestandteile der Pulvermodule 11a - 11c kann jedoch auch anderweitig, d. h. z. B. durch das Erdmagnetfeld, d. h. insbesondere durch Bewegungen der Pulvermodule 11a - 11c in dem Erdmagnetfeld, bedingt sein. Um der damit zusammenhängenden, eingangs erwähnten Problematik zu begegnen, umfasst die Anlage 1 eine Entmagnetisierungseinrichtung 14. Die Entmagnetisierungseinrichtung 14 ist zur automatisierbaren bzw. automatisierten Entmagnetisierung jeweiliger magnetisierter Bestandteile der Pulvermodule 11a - 11c eingerichtet. Es ist damit möglich, Entmagnetisierungsvorgänge automatisierbar bzw. automatisiert durchzuführen.

Die Entmagnetisierungseinrichtung 14 umfasst eine Erfassungseinheit 15, welche zur Erfassung der Magnetisierung eines magnetisierten Bestandteils eines Pulvermoduls 11a - 11c bzw. einer Trageinrichtung 12a - 12c eingerichtet ist. Die Erfassungseinheit 15 ist zur Erzeugung einer eine Magnetisierung des wenigstens einen magnetisierten Bestandteils des Pulvermoduls 11a - 11c, insbesondere der Trageinrichtung 12a - 12c, beschreibenden Erfassungsinformationen (Erfassungsergebnis) eingerichtet. Über die Erfassungseinheit 15 ist eine genaue Erfassung der Magnetisierung, d. h. insbesondere des (lokalen oder globalen) Magnetisierungsgrads, etwaiger (lokaler oder globaler) Magnetisierungsgradienten, eines magnetisierten Bestandteils möglich. Kenntnisse über die Magnetisierung eines magnetisierten Bestandteils ermöglichen eine effizientere Entmagnetisierung des Bestandteils. Die Erfassungseinheit 15 kann als Magnetometer (Gauß- oder Tesla-Meter) ausgebildet sein.

Die Entmagnetisierungseinrichtung 14 umfasst weiterhin eine Entmagnetisierungseinheit 16, welche zur Entmagnetisierung eines magnetisierten Bestandteils eines Pulvermoduls 11a - 11c, insbesondere einer Trageinrichtung 12a - 12c, eingerichtet ist. Die Entmagnetisierungseinheit 16 ist zur Durchführung wenigstens einer Maßnahme zur Entmagnetisierung eines magnetisierten Bestandteils des Pulvermoduls 11a- 11c bzw. der Trageinrichtung 12a - 12c eingerichtet. Bei der Maßnahme handelt es sich typischerweise um das Erzeugen eines Entmagnetisierungsfelds, d. h. eines statischen oder dynamischen magnetischen Wechselfelds. Die Entmagnetisierungseinheit 16 ist sonach zur Erzeugung eines entsprechenden Entmagnetisierungsfelds eingerichtet und umfasst die hierzu erforderlichen Entmagnetisierungselemente (nicht gezeigt), wie z. B. Entmagnetisierungsspulen.

Die Entmagnetisierungseinrichtung 14 umfasst ferner eine Steuereinrichtung 17, welche zur Steuerung des Betriebs der wenigstens einen Entmagnetisierungseinheit 16 in Abhängigkeit bzw. auf Grundlage einer eine Magnetisierung des wenigstens einen magnetisierten Bestandteils der Trageinrichtung beschreibenden Erfassungsinformation eingerichtet ist. Die hard- und/oder softwaremäßig implementierte, mit der Erfassungseinheit 15 und der Entmagnetisierungseinheit 16 datenmäßig gekoppelte Steuereinrichtung 17 ist im Hinblick auf einen konkret zu entmagnetisierenden magnetisierten Bestandteil eines Pulvermoduls 11a - 11c bzw. einer Trageinrichtung 12a - 12c individuell erzeugten Steuerinformationen eingerichtet, welche eine besonders effiziente Entmagnetisierung des zu entmagnetisierenden Bestandteils ermöglicht.

Ersichtlich umfasst die Entmagnetisierungseinrichtung 14 eine einen Aufnahmeraum 18 zur Aufnahme eines Pulvermoduls 11a - 11c, d. h. insbesondere eines zu entmagnetisierenden magnetisierten Bestandteils eines Pulvermoduls 11a - 11c bzw. einer Trageinrichtung 12a - 12c. In dem Aufnahmeraum 18 kann eine inerte Atmosphäre, insbesondere eine Schutzgasatmosphäre, d. h. z. B. eine Argon- oder Stickstoffatmosphäre, ausgebildet sein. Der Aufnahmeraum 18 kann (nach Außen) magnetisch abgeschirmt ein.

Anhand des zwischen der Vorrichtung 3 und der Entmagnetisierungseinrichtung 14 dargestellten Pulvermoduls 11a ist ersichtlich, dass Pulvermodule 11a - 11c in der bzw. innerhalb der Anlage 1 bewegt werden können. Pulvermodule 11a - 11c können 11a - 11c können sonach z. B. zu der Entmagnetisierungseinrichtung 14 bewegt werden, um einen zu entmagnetisierenden Bestandteil zu entmagnetisieren. Zur Bewegung des Pulvermodule 11a - 11c können diese, wie in Fig. 1 gezeigt, z. B. mit Rädern oder Rollen (nicht näher bezeichnet) ausgestattet sein. In analoger Weise ist es selbstverständlich auch denkbar, dass die Entmagnetisierungseinrichtung 14 in der bzw. innerhalb der Anlage 1 bewegbar ist und somit bewegt werden kann.

Bei der Entmagnetisierungseinrichtung 14 handelt es sich um eine mit einer eigenen Funktionalität - nämlich der Entmagnetisierung entsprechender Bestandteile von Pulvermodulen 11a - 11c - versehene Arbeitsstation (Entmagnetisierungsstation) innerhalb der Anlage 1. Weitere Arbeitsstationen innerhalb der Anlage 1 sind z. B. Bau- oder Prozessstationen, in welchen der eigentliche additive Herstellung der Objekte 2 erfolgt, Auspackstationen 22, in welchen ein "Auspacken" additiv hergestellter Objekte 2 aus dem diese umgebenden Baumaterial 4 erfolgt, oder Tankstationen 23, in welchen ein Befüllen oder Entleeren jeweiliger Pulvermodule 11a - 11c erfolgt.

Fig. 2 zeigt eine Prinzipdarstellung einer Anlage 1 zur additiven Herstellung dreidimensionaler Objekte 2, d. h. beispielsweise technischer Bauteile bzw. technischer Bauteilgruppen, gemäß einem weiteren Ausführungsbeispiel in einer schematischen Aufsicht.

Anhand von Fig. 2 ist ersichtlich, dass jeweilige Pulvermodule 11a - 11c zwischen verschiedenen Arbeitsstationen, bei welchen es sich um stationäre, d. h. nicht bewegbare, typischerweise fest mit einem Untergrund verbundene Bestandteile der Anlage 1 handelt, hin und her bewegt werden können.

Die Anlage 1 umfasst eine Tunnelstruktur 19. Die Tunnelstruktur 19 weist mehrere röhrenartige bzw. -förmige Tunnelabschnitte 20 auf, in welchen bzw. durch welche die Pulvermodule 11a - 11c bewegbar sind. In einem jeweiligen Tunnelabschnitt 20 ist wenigstens eine Bewegungsbahn 21, entlang welcher ein Pulvermodul 11a - 11c durch den Tunnelabschnitt 20 bewegbar ist, ausgebildet oder angeordnet. In einem Tunnelabschnitt 20 können zumindest abschnittsweise mehrere Bewegungsbahnen 21, d. h. z. B. benachbart, insbesondere parallel, angeordnete Bewegungsbahnen 21 in einer oder mehreren Ebenen, ausgebildet oder angeordnet sein. Eine entsprechende Bewegungsbahn 21 ermöglicht eine geführte Bewegung eines Pulvermoduls 11a - 11c in dem bzw. durch den jeweiligen Tunnelabschnitt 20. Die Tunnelabschnitte 20 können inertisierbar sein, d. h. in diesen kann eine inerte Atmosphäre ein bestimmtes Druckniveau, d. h. z. B. ein Über- oder Unterdruck, ausgebildet und aufrechterhalten werden.

Die Funktion der Tunnelstruktur 19 bzw. der dieser zugehörigen Tunnelabschnitte 20 besteht darin, unterschiedliche Arbeitsstationen der Anlage 1, d. h. z. B. Bau- oder Prozessstationen (Vorrichtungen 3) und z. B. die Entmagnetisierungsstation (Entmagnetisierungseinrichtung 14), unmittelbar oder mittelbar, d. h. z. B. unter Zwischenschaltung wenigstens eines weiteren Tunnelabschnitts 20 und/oder einer weiteren Arbeitsstation der Anlage 1, miteinander zu verbinden. Die Verbindung jeweiliger Arbeitsstationen der Anlage 1 ermöglicht ein hin und her Bewegen jeweiliger Pulvermodule 11a - 11c zwischen jeweiligen Arbeitsstationen der Anlage 1. Bewegungen jeweiliger Pulvermodule 11a - 11c durch die Tunnelstruktur 19 sind vollautomatisiert möglich.

Zur Bewegung jeweiliger Pulvermodule 11a - 11c umfasst die Anlage 1 eine mit einer (motorischen) Antriebseinrichtung (nicht gezeigt) gekoppelte Fördereinrichtung 24, über welche eine ein Pulvermodul 11a - 11c in eine Bewegung versetzende Antriebskraft erzeugbar ist. Die Fördereinrichtung 24 kann ein tunnelstrukturseitig angeordnetes oder ausgebildetes Fördermittel (nicht gezeigt) umfassen, welches eingerichtet ist, ein Pulvermodul 11a - 11c in eine Bewegung zu versetzen. Bei dem Fördermittel kann es sich z. B. um ein mechanisches Fördermittel, d. h. z. B. um einen Band-, Ketten- oder Rollenförderer, handeln, welches durch seine räumliche Erstreckung innerhalb eines jeweiligen Tunnelabschnitts 20 eine Förderstrecke und somit die Bewegungsbahn 21 definiert, entlang welcher ein Pulvermodul 11a - 11c bewegbar ist. Ein entsprechendes Fördermittel kann z. B. boden- oder wandseitig an einer Wandung eines Tunnelabschnitts 20 angeordnet oder ausgebildet sein.

Denkbar ist es auch, dass die Fördereinrichtung 24 jeweilige pulvermodulseitig angeordnete oder ausgebildete Fördermittel umfasst, welche eingerichtet sind, die mit diesen ausgestatteten Pulvermodule 11a - 11c in eine Bewegung zu versetzen. Bei einem solchen Fördermittel kann es sich z. B. um eine in ein jeweiliges Pulvermodul 11a - 11c integrierte (elektro)motorische Antriebseinrichtung handeln. Derart kann die Bewegungsfreiheit eines Pulvermoduls 11a - 11c erweitert werden, da z. B. Rotationsbewegungen um eine vertikale Achse möglich sind.

Die Auswahl einer Bewegungsbahn einer oder mehrerer Pulvermodule 11a - 11c zwischen jeweiligen Arbeitsstationen der Anlage 1 kann auf Grundlage bestimmter Priorisierungen bestimmter Pulvermodule 11a - 11c erfolgen. Für höher priorisierte Pulvermodule 11a - 11c können streckenmäßig kürzere bzw. schnellere Bewegungsbahnen 21 ausgewählt werden als für niedriger priorisierte Pulvermodule 11a - 11c. Gleichermaßen können höher priorisierte Pulvermodule 11a - 11c mit einer im Vergleich zu niedriger priorisierten Pulvermodulen 11a - 11c höheren Geschwindigkeit bewegt werden.

Die Steuerung sämtlicher Bewegungen der in der Tunnelstruktur 19 bewegten Pulvermodule 11a - 11c erfolgt über eine zentrale Steuereinrichtung 25, welche zweckmäßig unmittelbar oder mittelbar mit jeweiligen Pulvermodulen 11a - 11c, welche hierfür mit geeigneten, Kommunikationseinrichtungen (nicht näher bezeichnet) ausgestattet sein können, z. B. funkbasiert, kommuniziert. In der zentralen Steuereinrichtung 25 liegen sämtliche für die Bewegung jeweiliger Pulvermodule 11a - 11c innerhalb der Tunnelstruktur 19 relevanten Informationen, d. h. insbesondere jeweilige Bewegungsinformation, d. h. z. B. Geschwindigkeitsinformation, jeweilige Positionsinformation, d. h. z. B. Start- und Zielinformationen, jeweilige Priorisierungsinformationen, etc. vor. Die Steuerung der Bewegungen der in der Tunnelstruktur 19 bewegten Pulvermodule 11a - 11c kann vollautomatisch erfolgen.

Um mit der Tunnelstruktur 19 verbunden werden zu können, weisen die Arbeitsstationen der Anlage 1 jeweils wenigstens einen Verbindungsabschnitt 26 auf, über welchen diese mit der Tunnelstruktur 19 verbindbar oder verbunden sind. Der Verbindungsabschnitt 26 stellt einen Ein- bzw. Ausgangsbereich von der jeweiligen Arbeitsstationen der Anlage 1 in die Tunnelstruktur 19 und von der Tunnelstruktur 19 in die jeweiligen Arbeitsstationen dar.

Wenngleich in den Fig. nicht gezeigt, können in jeweiligen Arbeitsstationen der Anlage 1, d. h. z. B. in der Vorrichtung 3 bzw. in der Entmagnetisierungseinrichtung 14, ebenso Tunnelabschnitte 20 der Tunnelstruktur 19 angeordnet oder ausgebildet sein, welche über jeweilige Verbindungsabschnitte 26 mit einem außerhalb der jeweiligen Arbeitsstation der Anlage 1 angeordneten oder ausgebildeten Tunnelabschnitt 20 kommunizieren. Die Tunnelstruktur 19 kann sich sonach (auch) durch entsprechende Arbeitsstationen der Anlage 1 erstrecken.

## Patentansprüche

1. Anlage (1) zur additiven Herstellung dreidimensionaler Objekte, umfassend:
- wenigstens eine Vorrichtung (3), welche zur additiven Herstellung eines dreidimensionalen Objekts (2) durch sukzessive schichtweise selektive Belichtung und damit einhergehende Verfestigung von selektiv zu verfestigenden Baumaterialschichten aus einem verfestigbaren Baumaterial in Form eines Metall-, Kunststoff- und/oder Keramikpulvers vermittels eines Energiestahls (5) eingerichtet ist, wobei die Vorrichtung (3) eine Beschichtereinrichtung (6) zur Ausbildung selektiv zu belichtender Baumaterialschichten in einer Bauebene (7) und eine eine oder mehrere Belichtungselemente umfassende Belichtungseinrichtung (8) zur Erzeugung eines Energiestrahls (5) zur selektiven Belichtung einer vermittels der Beschichtereinrichtung (6) in der Bauebene (7) ausgebildeten, selektiv zu belichtenden und somit selektiv zu verfestigenden Baumaterialschicht umfasst;
- wenigstens ein Pulvermodul (11a - c), welches eine ein Pulverkammervolumen begrenzende Pulverkammer zur Aufnahme von im Rahmen eines additiven Bauvorgangs zu verfestigendem oder im Rahmen eines additiven Bauvorgangs nicht verfestigtem Baumaterial (4) mit einer darin angeordneten oder ausgebildeten, wenigstens einen magnetisierbaren Bestandteil umfassenden Trageinrichtung (12a - 12c) umfasst, wobei handelt, es sich bei wenigstens einem Pulvermodul (11a -c) um ein Baumodul (11a) in welchem der additive Aufbau dreidimensionaler Objekte (2) erfolgt und welches hierfür im Rahmen der Durchführung additiver Herstellungsprozesse sukzessive schichtweise mit selektiv zu verfestigendem Baumaterial (4) befüllt wird;
- wenigstens eine Entmagnetisierungseinrichtung (14), welche zur automatisierbaren oder automatisierten Entmagnetisierung wenigstens eines magnetisierten Bestandteils zumindest des Baumoduls (11a), insbesondere dessen Trageinrichtung (12a), eingerichtet ist.

2. Anlage nach Anspruch 1, **dadurch gekennzeichnet, dass** die Entmagnetisierungseinrichtung (14) wenigstens eine Erfassungseinheit (5), welche zur Erfassung der Magnetisierung eines magnetisierten Bestandteils des Pulvermoduls (11a - 11c), insbesondere der Trageinrichtung (12a - 12c), eingerichtet ist, umfasst.

3. Anlage nach Anspruch 2, **dadurch gekennzeichnet, dass** die Erfassungseinheit (15) als ein Magnetometer ausgebildet ist oder ein solches umfasst.

4. Anlage nach einem der vorhergehenden Ansprüche, **dadurch gekennzeichnet, dass** die Entmagnetisierungseinrichtung (14) wenigstens eine Entmagnetisierungseinheit (16), welche zur Entmagnetisierung des wenigstens einen magnetisierten Bestandteils des Pulvermoduls (11a - 11c), insbesondere der Trageinrichtung (12a - 12c), eingerichtet ist, umfasst.

5. Anlage nach Anspruch 4, **dadurch gekennzeichnet, dass** die Entmagnetisierungseinheit (16) zur Erzeugung eines Demagnetisierungsfelds, insbesondere eines magnetischen Wechselfelds, eingerichtet ist.

6. Anlage nach Anspruch 2 oder 3 und Anspruch 4 oder 5, **gekennzeichnet durch** eine Steuereinrichtung (17), welche zur Steuerung des Betriebs der wenigstens einen Entmagnetisierungseinheit (16) in Abhängigkeit einer eine Magnetisierung des wenigstens einen magnetisierten Bestandteils des Pulvermoduls (11a - 11c), insbesondere der Trageinrichtung (12a - 12c), beschreibenden Erfassungsinformation eingerichtet ist.

7. Anlage nach einem der vorhergehenden Ansprüche, **dadurch gekennzeichnet, dass** die Entmagnetisierungseinrichtung (14) eine einen Aufnahmeraum (18) zur Aufnahme eines zu entmagnetisierenden magnetisierten Bestandteils des Pulvermoduls (11a - 11c), insbesondere der Trageinrichtung (12a - 12c), umfasst, wobei in dem Aufnahmeraum (18) eine inerte Atmosphäre ausbildbar oder ausgebildet ist.

8. Anlage nach einem der vorhergehenden Ansprüche, **dadurch gekennzeichnet, dass** das Pulvermodul (11a - 11c) innerhalb der Anlage (1), insbesondere zwischen der Vorrichtung (3) und der Entmagnetisierungseinrichtung (14), und umgekehrt, bewegbar ist.

9. Anlage nach einem der vorhergehenden Ansprüche, **gekennzeichnet durch** eine Tunnelstruktur (19), welche wenigstens einen Tunnelabschnitt (20) aufweist, in welchem das Pulvermodul (11a - 11c) bewegbar ist, wobei
die wenigstens eine Vorrichtung (3) wenigstens einen Verbindungsabschnitt (26) aufweist, über welchen die Vorrichtung (3) mit der Tunnelstruktur (19) verbindbar oder verbunden ist, sodass das Pulvermodul (11a - 11c) ausgehend von der Vorrichtung (3) in die Tunnelstruktur (19) oder ausgehend von der Tunnelstruktur (19) in die Vorrichtung (3) bewegbar ist, und/oder die wenigstens eine Entmagnetisierungseinrichtung (14) wenigstens einen Verbindungsabschnitt (26) aufweist, über welchen die Vorrichtung (3) mit der Tunnelstruktur (19) verbindbar oder verbunden ist, sodass das Pulvermodul (11a - 11c) ausgehend von der Entmagnetisierungseinrichtung (14) in die Tunnelstruktur (19) oder ausgehend von der Tunnelstruktur (19) in die Entmagnetisierungseinrichtung (14) bewegbar ist.

10. Anlage nach Anspruch 9, **gekennzeichnet durch** eine Fördereinrichtung (24) zur Förderung des wenigsten einen Pulvermoduls (11a - 11c) innerhalb der Tunnelstruktur (19), wobei die Fördereinrichtung (24) wenigstens ein tunnelstrukturseitig angeordnetes oder ausgebildetes Fördermittel umfasst, welches eingerichtet ist, das wenigstens eine Pulvermodul (11a - 11c) in eine Bewegung zu versetzen, und/oder wenigstens ein pulvermodulseitig angeordnetes oder ausgebildetes Fördermittel umfasst, welches eingerichtet ist, das wenigstens eine Pulvermodul (11a - 11c) in eine Bewegung zu versetzen.

## Claims

1. Installation (1) for additive manufacture of three-dimensional objects, comprising:
- at least one device (3) which is configured for additive manufacture of a three-dimensional object (2) by means of successive layered selective exposure, and associated solidification of build material layers that are to be solidified selectively and that are made of a solidifiable build material in the form of a metal, plastics and/or ceramic powder, using an energy beam (5), wherein the device (3) comprises a coater means (6) for forming build material layers to be selectively exposed, in a construction plane (7), and an exposure means (8) that comprises one or more exposure elements and is intended for generating an energy beam (5) for selective exposure of a build material layer formed by the coater means (6) in the construction plane (7) that is to be selectively exposed and thus selectively solidified,
- at least one powder module (11a - c) which comprises a powder chamber that defines a powder chamber volume and is intended for receiving build material (4) that is to be solidified within the context of an additive construction process or that is not solidified within the context of an additive construction process, with a support means (12a - 12c) that is arranged or formed therein and comprises at least one magnetisable component, wherein
the at least one powder module (11a - c) is a construction module (11a) in which the additive construction of three-dimensional objects (2) takes place, and which is filled, for this purpose, and within the context of carrying out additive manufacturing processes, successively and in layers with build material (4) to be selectively solidified;
- at least one demagnetisation means (14) which is configured for automatable or automatic demagnetisation of at least one magnetised component, at least of the construction module (11a), in particular of the support means (12a) thereof.

2. Installation according to claim 1, **characterised in that** the demagnetisation means (14) comprises at least one detection unit (15) which is configured for detecting the magnetisation of a magnetisable component of the powder module (11a - 11c), in particular of the support means (12a - 12c).

3. Installation according to claim 2, **characterised in that** the detection unit (15) is configured as or comprises a magnetometer.

4. Installation according to any of the preceding claims, **characterised in that** the demagnetisation means (14) comprises at least one demagnetisation unit (16) which is configured for demagnetising the at least one magnetic component of the powder module (11a - 11c), in particular of the support means (12a - 12c).

5. Installation according to claim 4, **characterised in that** the demagnetisation unit (16) is configured for generating a demagnetisation field, in particular an alternating magnetic field.

6. Installation according to either claim 2 or claim 3, and either claim 4 or claim 5, **characterised by** a controller (17) which is configured for controlling the operation of the at least one demagnetisation unit (16) depending on an item of detection information that describes a magnetisation of the at least one magnetic component of the powder module (11a - 11c), in particular of the support means (12a - 12c).

7. Installation according to any of the preceding claims, **characterised in that** the demagnetisation means (14) comprises a receiving space (18) for receiving a magnetic component of the powder module (11a - 11c), in particular of the support means (12a - 12c), that is to be demagnetised, wherein an inert atmosphere can be or is formed in the receiving space (18).

8. Installation according to any of the preceding claims, **characterised in that** the powder module (11a - 11c) is movable within the installation (1), in particular between the device (3) and the demagnetisation means (14), and vice versa.

9. Installation according to any of the preceding claims, **characterised by** a tunnel structure (19) which comprises at least one tunnel portion (20) in which the powder module (11a - 11c) is movable, wherein the at least one device (3) comprises at least one connecting portion via which the device (3) can be or is connected to the tunnel structure (19), such that the powder module (11a - 11c) is movable from the device (3) into the tunnel structure (19), or from the tunnel structure (19) into the device (3), and/or the at least one demagnetisation means (14) comprises at least one connecting portion (26) via which the device (3) can be or is connected to the tunnel structure (19), such that the powder module (11a - 11c) is movable from the demagnetisation means (14) into the tunnel structure (19) or from the tunnel structure (19) into the demagnetisation means (14).

10. Installation according to claim 9, **characterised by** a conveying means (24) for conveying the at least one powder module (11a - 11c) within the tunnel structure (19), wherein the conveying means (24) comprises at least one conveying means which is arranged or formed on the tunnel structure side and which is configured to cause the at least one powder module (11a - 11c) to move, and/or comprises at least one conveying means which is arranged or formed on the powder module side and which is configured to cause the at least one powder module (11a - 11c) to move.

## Revendications

1. Installation (1) de fabrication additive d'objets tridimensionnels, comprenant :
- au moins un dispositif (3), lequel est mis au point pour fabriquer de manière additive un objet (2) tridimensionnel par exposition sélective couche par couche successive accompagnée d'une solidification de couches de matériau de construction à solidifier de manière sélective, composées d'un matériau de construction pouvant être solidifié sous la forme d'une poudre métallique, plastique et/ou céramique au moyen d'un faisceau d'énergie (5), dans laquelle le dispositif (3) comprend un système d'enduction (6) servant à réaliser des couches de matériau de construction à exposer de manière sélective dans un plan de construction (7) et un système d'exposition (8) comprenant un ou plusieurs éléments d'exposition, servant à générer un faisceau d'énergie (5) pour exposer de manière sélective une couche de matériau de construction réalisée au moyen du système d'enduction (6) dans le plan de construction (7), à exposer de manière sélective et ainsi à solidifier de manière sélective ;
- au moins un bloc de poudre (11a - c), lequel comprend une chambre de poudre délimitant un volume de chambre de poudre, servant à recevoir du matériau de construction (4) à solidifier dans le cadre d'une opération de construction additive ou non solidifié dans le cadre d'une opération de construction additive avec un système de support (12a - 12c) disposé ou réalisé dans ce dernier, comprenant au moins un élément constitutif magnétisable, dans laquelle
au moins un bloc de poudre (11a - c) est un module de construction (11a), dans lequel la construction additive d'objets (2) tridimensionnels est réalisée et lequel est rempli à cet effet, dans le cadre de la mise en œuvre de processus de fabrication additive de manière successive couche par couche de matériau de construction (4) à solidifier de manière sélective ;
- au moins un système de démagnétisation (14), lequel est mis au point pour démagnétiser de manière automatisable ou automatisée au moins un élément constitutif magnétisé au moins du module de construction (11a), en particulier son système de support (12a).

2. Installation selon la revendication 1, **caractérisée en ce que** le dispositif de démagnétisation (14) comprend au moins une unité de détection (5), laquelle est mise au point pour détecter la magnétisation d'un élément constitutif magnétisé du bloc de poudre (11a - 11c), en particulier du système de support (12a - 12c).

3. Installation selon la revendication 2, **caractérisée en ce que** l'unité de détection (15) est réalisée en tant qu'un magnétomètre ou comprend un magnétomètre de ce type.

4. Installation selon l'une quelconque des revendications précédentes, **caractérisée en ce que** le système de démagnétisation (14) comprend au moins une unité de démagnétisation (16), laquelle est mise au point pour démagnétiser l'au moins un élément constitutif magnétisé du bloc de poudre (11a - 11c), en particulier du système de support (12a - 12c).

5. Installation selon la revendication 4, **caractérisée en ce que** l'unité de démagnétisation (16) est mise au point pour générer un champ de démagnétisation, en particulier un champ alternatif magnétique.

6. Installation selon la revendication 2 ou 3 et la revendication 4 ou 5, **caractérisée par** un système de commande (17), lequel est mis au point pour commander le fonctionnement de l'au moins une unité de démagnétisation (16) en fonction d'une information de détection décrivant une magnétisation de l'au moins un élément constitutif magnétisé du bloc de poudre (11a - 11c), en particulier du système de support (12a - 12c).

7. Installation selon l'une quelconque des revendications précédentes, **caractérisée en ce que** le système de démagnétisation (14) comprend un espace de réception (18) servant à recevoir un élément constitutif magnétisé à démagnétiser du bloc de poudre (11a -11c), en particulier du système de support (12a - 12c), dans laquelle une atmosphère inerte peut être réalisée ou est réalisée dans l'espace de réception (18).

8. Installation selon l'une quelconque des revendications précédentes, **caractérisée en ce que** le bloc de poudre (11a - 11c) peut être déplacé à l'intérieur de l'installation (1), en particulier entre le dispositif (3) et le système de démagnétisation (14), et inversement.

9. Installation selon l'une quelconque des revendications précédentes, **caractérisée par** une structure de tunnel (19), laquelle présente au moins une section de tunnel (20), dans laquelle le bloc de poudre (11a - 11c) peut être déplacé, dans laquelle l'au moins un dispositif (3) présente au moins une section de liaison (26), par l'intermédiaire de laquelle le dispositif (3) peut être relié ou est relié à la structure de tunnel (19) si bien que le bloc de poudre (11a - 11c) peut être déplacé dans la structure de tunnel (19) en partant du dispositif (3) ou dans le dispositif (3) en partant de la structure de tunnel (19), et/ou l'au moins un système de démagnétisation (14) présente au moins une section de liaison (26), par l'intermédiaire de laquelle le dispositif (3) peut être relié ou est relié à la structure de tunnel (19) si bien que le bloc de poudre (11a - 11c) peut être déplacé dans la structure de tunnel (19) en partant du système de démagnétisation (14) ou dans le système de démagnétisation (14) en partant de la structure de tunnel (19).

10. Installation selon la revendication 9, **caractérisée par** un système de convoyage (24) servant à convoyer l'au moins un bloc de poudre (11a - 11c) à l'intérieur de la structure de tunnel (19), dans laquelle le système de convoyage (24) comprend au moins un moyen de convoyage disposé ou réalisé du côté de la structure de tunnel, lequel est mis au point pour amener l'au moins un bloc de poudre (11a - 11c) dans un mouvement, et/ou comprend au moins un moyen de convoyage disposé ou réalisé du côté du bloc de poudre, lequel est mis au point pour amener l'au moins un bloc de poudre (11a - 11c) dans un mouvement.
